# EUROPEAN PATENT APPLICATION

(11) **EP 1 061 758 A1**
(43) Date of publication of application: **20.12.2000**
(21) Application number: 00304771.9
(22) Date of filing: 06.06.2000
(51) Int. Cl.: H04Q 7/38

(54) **Data type based call routing in a wireless communication system**

(30) Priority: 17.06.1999 US 334973
(71) Applicant: LUCENT TECHNOLOGIES INC., Murray Hill, New Jersey 07974-0636 (US)
(72) Inventor: Johnson, Robert Everest, Randolph, New Jersey 07869 (US)
(74) Representative: Buckley, Christopher Simon Thirsk

(57) **Abstract**

A base station (114) in a wireless communication system directs data of a particular type, such as digital image data, to a destination appropriate for the data type without the user having to specify the destination's telephone number. The destination appropriate for the data type can be specified in a profile (196) associated with the user. The profile (196) may be stored by the user's wireless service provider and accessed when the data is received. In this way, data of different types can be directed to various destinations, e.g. different servers, as specified in the profile. When the user initiates a data transmission, such as by operating a send key on a digital camera (126), the digital camera (126) (or mobile terminal to which it is connected) may transmit the data to the base station (114) in any of a number of ways. For example, it can use a conventional traffic channel using a predefined dialing code, e.g. "555" to signify that image data is being transmitted. Alternatively, either a so-called control channel or a channel dedicated to a particular data type can be used. Upon receiving the data, the base station (114) can determine the data type in any of a number of ways. For example, the base station (114) can infer the data type from either a) the predefined dialing code, b) the electronic serial number of the device transmitting the data, or c) from the fact the data was received on a channel dedicated to the particular type of data. Alternatively, the data can contain a label that explicitly identifies the data type. Directing data of a particular type to a destination appropriate for the data type without the user having to specify the destination's telephone number allows the user to transmit data to the destination without having to remember the destination's telephone number, or even take the time to dial the number.

## Description

### Background of the Invention

The present invention relates generally to the field of wireless communication systems and more particularly to data transmission over wireless communication systems.

Portable devices that generate or receive data need a memory to store the data. A large memory permits the portable device to store more data. For example, when the portable device is a digital camera, a large memory permits a user to store more photographs. However, a large memory makes the portable device more expensive. To balance the desire to store more data with the desire to keep the portable device inexpensive, a user can be provided with the capability of dialing a telephone number to access a remote server and to thereupon transmit the digital-camera data over a wireless communication system to the server where it can be stored, printed, or transmitted further. For example, as described in United States Patent 5,737,491, issued April 7, 1998 to Allen et al., an amateur photographer can capture electronic images, which may be transmitted to a so-called fulfillment server, where the images are printed, and thereupon forwarded to a desired address. Alternatively, the digital images may be stored for future access by the photographer, or further transmitted to a designated e-mail address.

### Summary of the Invention

I have recognized that the above-described process can be made easier for the user. In accordance with the present invention, a wireless base station directs data of a particular type, such as digital image data, to a destination appropriate for the data type independent of the destination's telephone number. Advantageously, this approach allows the user to transmit data to the destination without having to remember the destination's telephone number, or even take the time to dial the number. A further advantage is that, in certain implementations of the invention, the device from which the user transmits the data does not have to be outfitted with a dialing keypad.

In accordance with a feature of the invention, a destination appropriate for the data type can be specified in a profile associated with the user. The profile may for example be stored by the user's wireless service provider and accessed when the data is received. In this way, data of different types can be directed to various destinations, e.g. different servers, as specified in the profile.

When the user initiates a data transmission, such as by operating a send key on a wireless-capable digital camera, the digital camera (or mobile terminal to which it is connected) may transmit the data to the base station in any of a number of ways. For example, it can use a conventional traffic channel using a predefined dialing code, e.g. "555", to signify that image data is being transmitted. Alternatively, either a so-called control channel or a channel dedicated to a particular data type can be used to transmit the data. Upon receiving the data, the base station can determine the data type in any of a number of ways. For example, the base station can infer the data type from either a) the predefined dialing code, b) a terminal identifier, such as the electronic serial number of the device transmitting the data, or c) from the fact the data was received on a channel dedicated to the particular type of data. Alternatively the data can contain a label that explicitly identifies the data type.

### Brief Description of the Drawings

Figure 1 is a block diagram of a portion of a wireless communication system that directs data based on the data type associated with the data;
Figure 2 is a block diagram of a base station of the wireless communication system and of a digital camera having a transmitter and receiver integrated into the digital camera; and
Figures 3-6 illustrate various methods of transmitting a signal from the digital camera to the base station.

### Detailed Description

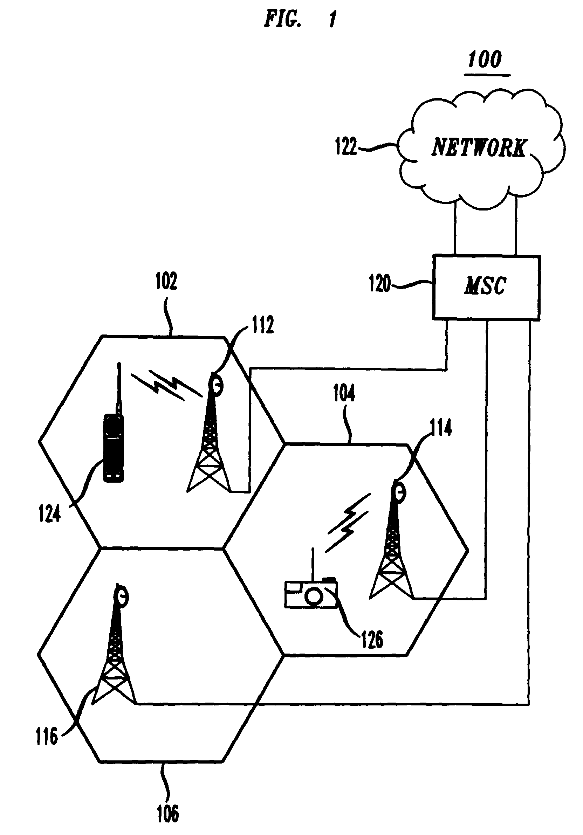

Figure 1 is a block diagram illustrating wireless communication system 100 programmed to recognize a plurality of data types. Illustratively, wireless communication system 100 is a Code Division Multiple Access (CDMA) system, although it can be any known wireless communication system, such as Time Division Multiple Access (TDMA), Global System for Mobile (GSM), or Advanced Mobile Phone Service (AMPS). The geographic area serviced by wireless telecommunications system 100 is divided into a plurality of spatially distinct areas called "cells." Cell 102, 104, 106 are approximated and schematically represented by a hexagon in a honeycomb pattern; however, each cell is actually of an irregular shape that depends on the topography of the terrain surrounding the cell. Each cell 102, 104, 106 contains one base station 112, 114, 116, respectively. Each of base stations 112, 114, 116 includes equipment to communicate with Mobile Switching Center ("MSC") 120, which is connected to local and/or long-distance transmission network 122, such as a public switched telephone network (PSTN). Each base station 112, 114, 116 also includes radios and antennas that the base station uses to communicate with terminals 124, 126. Such terminals conventionally establish wireless connections with a base station by initiating respective call requests, each of which includes one or more dialing digits associated with a desired destination.

Terminals 124, 126 can be any stationary or mobile terminal capable of obtaining data and transmitting the data to one of the base stations. For example, the terminals can be wireless telephones or they can be wireless-communication-capable computers, pagers, or digital cameras. At least some of the data may represent alphanumeric, pictorial, graphic or other visually or audibly presentable information. The data may be grouped into a file, which can be a set of data or a collection of sets of data.

For ease of reference, the operation of the preferred embodiment will be described with the terminal being digital camera 126, although one skilled in the art will see that the process works similarly for any terminal capable of transmitting data.

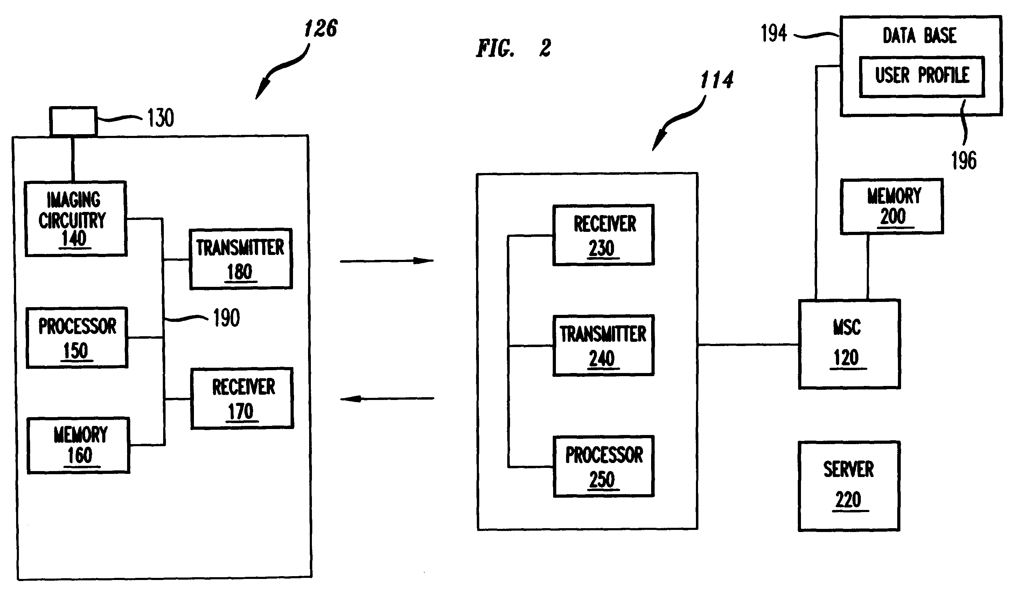

Figure 2 illustrates digital camera 126 and base station 114 in more detail. Digital camera 126 includes photo key 130, imaging circuitry 140, processor 150, memory 160, receiver 170, and transmitter 180, all coupled through bus 190. Digital camera 126 may also include other elements, not shown, such as additional keys, a display for the user to view a photograph that is either about to be taken or a photograph already in memory 160, and/or a control key pad.

Digital camera 126 generates data that represents images, hereinafter image data, by taking a photograph. For example, a user depresses photo key 130, actuating imaging circuitry 140 to obtain an image, which is then processed by processor 150. Digital camera 126 also generates image data by modifying an image stored in memory 160.

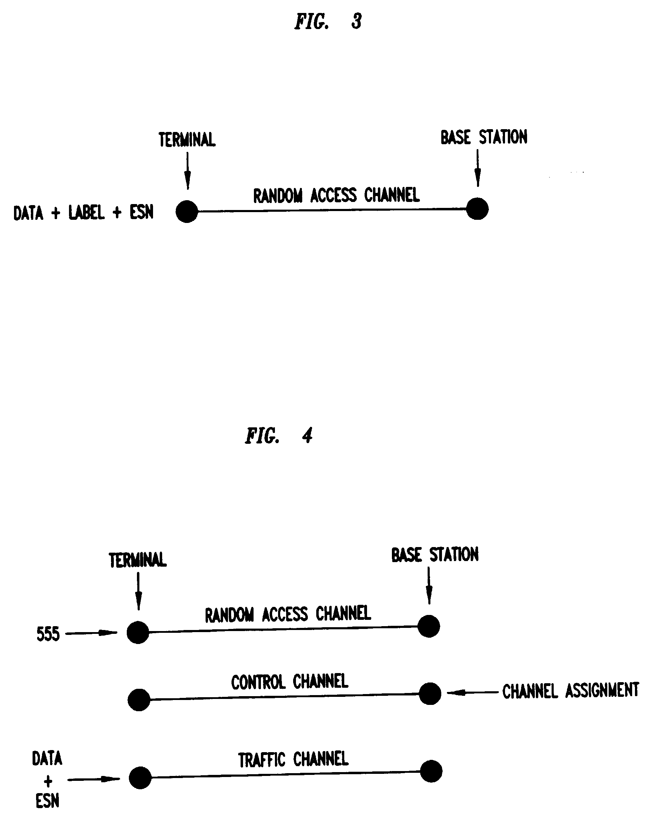

Digital camera 126 illustratively generates images in Joint Photographic Experts Group (JPEG) format. As shown in Figure 3, digital camera 126 illustratively includes with the data transmitted to the base station a label identifying the data as representing JPEG images and a terminal identifier which can be an electronic serial number (ESN) of digital camera 126 or of the mobile terminal to which it is connected.. Preferably, the data is fragmented and packaged into data packets prior to transmission. The data packets are transmitted over a traffic channel or one of the control channels such as a random access channel (RACH) of wireless communication system 100. The random access channels are the channels over which terminals request access to the system. The digital camera does not need to establish a normal connection with the base station to transmit the data. Digital camera 126 can transmit the data packets in a random-access-type packet data transfer request on one of the traffic or control channels. This allows the digital camera to transmit data without first transmitting, in the conventional way, a call request that includes a dialing digits.

When base station 114 receives the data, it obtains the label and determines from this label that the data type is JPEG image type. Base station 114 also obtains the ESN from the data and uses the ESN to access user profile 196 stored in database 194 for the source of the signal, that source being digital camera 126 in this case. Database 194 can be a database in MSC 120 or any database that can be coupled to MSC 120 through a wire or wireless channel. User profile 196 contains information identifying the destination appropriate for JPEG image type. Base station 114 determines the appropriate destination for the data by retrieving this information from user profile 196 and directs the data to that destination. The options in the profile that designate a destination where a particular data type should be directed can be set up when the user first signs up with the wireless communication system. The user can then repeatedly redefine these options at the user's convenience.

For example, the user of digital camera 126 can specify in the user profile 196 that JPEG image data should be stored in image memory 200 within the overall, telecommunications network. Image memory 200 can be made available by the wireless service provider or by the network service provider. The JPEG image data can thereafter be accessed, printed, or transmitted further. Image memory 200 may be coupled to MSC 120 through a wire connection, or data can be transmitted between the two via a wireless channel.

Alternatively, the user profile 196 can specify that JPEG image data should be transmitted to an image service provider where it can be accessed, stored, printed, or transmitted further. If there are multiple service providers that deal with a particular type of data, the user profile 196 can also specify to which service provider the data should be transmitted. Base station 114 can transmit data to image service provider's server 220 through the wireless communication network, or through local and/or long-distance transmission network, such as a PSTN.

The foregoing is merely one illustrative method of the terminal transmitting the data to the base station and the base station identifying the type of the data. Three other methods are described below, although any appropriate method can be used.

For example, as depicted in Figure 4, wireless communication system 100 may use a predefined dialing code, e.g. "555", associated with the data type being transmitted―in this case, image data. Digital camera 126 can then request to set up a call using the predefined dialing code, which it transmits to the base station over a random access channel, when it wishes to transmit the image data to base station 114. Base station 114 assigns to digital camera 126 a traffic communication channel, and communicates the identity of that channel over a control channel. Digital camera 126 thereupon uses this traffic channel to transmit the image data to the base station. Digital camera 126 would also send the terminal identifier, such as the ESN of the digital camera (or of the terminal to which it is connected), to allow base station 114 to access the user profile 196. When base station 114 receives a request to set up a call using the predefined dialing code, base station infers that the signal it will receive during the call will contain image data. Base station 114 then accesses the user profile, which it obtains with the aid of the ESN, and determines the destination as a function of the predefined dialing code, by retrieving the information from the user profile 196 identifying the destination of the data type associated with the predefined dialing code.

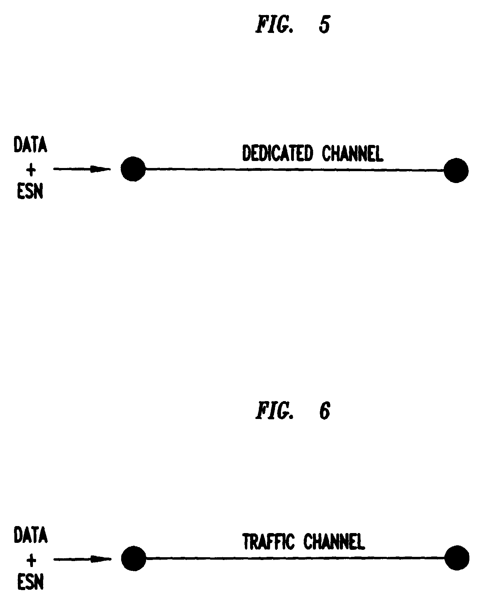

In another example, as depicted in Figure 5, wireless communication system 100 may provide a dedicated channel for each type of data. For example, image data can be transmitted on a channel dedicated to image data. Digital camera 126 can transmit the image data to base station 114 on such a dedicated channel. Digital camera 126 would also send the terminal identifier, such as the ESN of the digital camera (or of the terminal to which it is connected), with the data to allow base station 114 to access the user profile 196. When base station 114 receives data on the channel dedicated to image data, base station 114 infers that the data is image data. Base station 114 then accesses the user profile, which it obtains with the aid of the ESN, and directs the image data as specified in the user profile 196.

In a third example, as shown in Figure 6, base station 114 may use the terminal identifier, such as the ESN, to infer the data type. For example, when the terminal is digital camera 126, the base station uses the ESN of digital camera 126 to infer the data type. Digital camera 126 can transmit the data and the ESN to base station 114 over a traffic channel or one of control channels such as the random access channels of wireless communication system 100. Base station 114 obtains the ESN from the signal and uses the ESN to access the user profile. The user profile identifies the terminal sending the data as a digital camera. Base station 114 can now identify the data as image data because the digital camera can only transmit image data. Base station 114 directs the data as specified in the user profile 196 for image data. In this embodiment, the terminal should be able to generate only one type of data and should have an ESN assigned to the terminal.

The forgoing is merely illustrative. Thus, for example although the digital camera or other terminal may include a wireless transmitter and receiver as shown in Figure 2, the terminal can alternatively be provided with a connection port that couples the terminal to a conventional mobile terminal.

Furthermore, although the data type can be the JPEG image type, the data type can be any data type, such as an uncompressed image type, a text type, or a video type.

It will thus be appreciated that although the invention has been described with reference to a preferred embodiment, those skilled in the art having reference to the specification and drawings will be able to devise various modifications and alternatives without departing from the spirit and scope of the invention.

## Claims

1. A method for directing data in a wireless communication system (100), the method CHARACTERIZED BY the steps of:
receiving a signal containing data of a particular data type;
determining a destination appropriate for the data type independent of the destination's telephone number; and
directing the data to that destination.

2. The method according to claim 1, CHARACTERIZED IN THAT the determining step comprises retrieving the information identifying the destination from a user profile (196) maintained by the wireless communication system (100) for a source of the received signal.

3. The method according to claim 1, CHARACTERIZED IN THAT the receiving step comprises receiving the signal on a dedicated channel of the wireless communication system (100), wherein the dedicated channel is dedicated to the particular data type.

4. The method according to claim 1 CHARACTERIZED IN THAT:
in the receiving step a predefined dialing code associated with the particular data type is received; and
in the determining step, the destination is determined as a function of the predefined dialing code.

5. The method according to claim 1, CHARACTERIZED IN THAT the directing step comprises directing the data to a memory (200) of the wireless communication system (100).

6. The method according to claim 1, CHARACTERIZED IN THAT the directing step comprises transmitting the data to a memory (220) of a service provider.

7. A method for transmitting a signal from a terminal (126), the signal containing data of a particular data type, the method comprising the steps of:
generating the data;
transmitting the signal containing the data using a predefined dialing code associated with the particular data type, whereby a receiver that receives the signal can determine a destination appropriate for the data.

8. A method for use in a wireless communication system (100) of a type which establishes wireless connections between terminals and a base station (114) in response to respective call requests each of which includes one or more dialing digits, the method comprising the step of:
transmitting a signal containing data from a terminal (126) to the base station (114) over a wireless connection established in response to other than such a call request.

9. The method according to claim 8, wherein transmitting step comprises transmitting the signal on a dedicated channel of the wireless communication system (100), wherein the dedicated channel is dedicated to the particular data type.

10. The method according to either of claims 1 or 8, CHARACTERIZED IN THAT the signal further contains a terminal identifier, wherein the data type is specified by the type of terminal associated with the terminal identifier.

11. The method according to either of claims 1 or 8, CHARACTERIZED IN THAT the signal further comprises a label, wherein the data type is specified by the label.

12. The method according to either of claims 1 or 8, CHARACTERIZED IN THAT the particular data type is image type.
